# EUROPEAN PATENT SPECIFICATION

(11) **EP 0 704 860 B1**
(45) Date of publication and mention of the grant of the patent: **29.12.1999**
(21) Application number: 94830171.8
(22) Date of filing: 13.04.1994
(51) Int. Cl.: G21C 15/18, G21C 9/012

(54) **A steam condenser with natural circulation for nuclear reactor protection systems**
Naturumlauf-Dampfkondensator für -Kernreaktorschutzsystemen
Condenseur de vapeur à circulation naturelle pour systèmes de protection de réacteurs nucléaires

(43) Date of publication of application: 03.04.1996
(73) Proprietor: FINMECCANICA S.p.A. AZIENDA ANSALDO, 16128 Genova (IT)
(72) Inventor: Magris, Flavio, I-16036 Recco (Genova) (IT); Rizzo, Franco Luigi, I-16146 Genova (IT)
(74) Representative: Perani, Aurelio

(56) References cited:
- EP-A- 0 068 913
- EP-A- 0 475 700
- EP-A- 0 526 059
- DE-A- 2 932 815
- DE-A- 3 236 778
- FR-A- 2 584 228
- PROCEEDINGS OF THE INT. CONF. ON DESIGN & SAFETY OF ADVANCED NUCLEAR POWER PLANTS, 25-29 OCT. 1992, TOKYO, JAPAN, vol. 3, pages 31.2-1-31.2-7, VIEROW ET AL. 'Analysis of SBWR passive containment cooling following a LOCA'

## Description

The subject of the present invention is an innovative steam condenser with natural circulation for nuclear reactors protection systems.

Although the invention is described with reference to nuclear reactors of the boiling-water type (BWR), clearly, it can be used in any power plant in which a system for generating steam at high pressure and the use thereof in closed circuit requires protection which ensures rapid dissipation of the heat content.

In boiling-water reactors, the water under pressure housed in the reactor pressure-vessel (or RPV) is used as a reaction moderator and as a vehicle for the exchange of heat and the conversion of the reaction heat into other forms of energy.

The water housed in the RPV is brought to boiling point and the steam, which is extracted from the RPV at high pressure by pipes, supplies steam turbines coupled to electrical generators. The steam output at low pressure by the turbines is condensed in suitable condensers and the condensed water is re-admitted to the RPV by means of pumps.

The greater part of the plant which is under pressure is housed in a very strong structure which can withstand considerable internal pressures, and is known as the primary container (PC). The primary container is also intended to house at least some of the protection equipment and systems. In a conventional BWR plant, the excess pressure caused by a transient isolation of the main steam lines is limited by the automatic opening of safety-overflow valves which discharge the steam produced in the reactor vessel, under a hydrostatic head, into a pool disposed within the primary container.

This has the following disadvantages:
1. an abrupt pressure-drop which triggers pressure-oscillation and cycling phenomena, that is, the repeated pulsed intervention of the safety-overflow valves, with the possibility of one or more of them jamming;
2. the need to provide the plant with a restoration system, by means of pumps drawing from suitable reservoirs, of the fluid (water) housed in the main reactor vessel, to compensate for the quantity discharged;
3. the need to transfer out of the main container the heat of condensation transferred by the steam to the water of the pool, with circulation and cooling systems outside the pool water.

These problems are overcome by a protection system having a steam condenser, called the isolation condenser, which is connected to the steam zone of the reactor pressure-vessel by a permanently-open connection, and is connected in a natural-circulation circuit with passive operation based solely on the automatic opening of a redundant valve disposed in the line which returns the condensate to the reactor pressure-vessel.

The pressure of the primary system in transient conditions, can be limited to a value below the point at which the safety valves open, limiting their intervention and the loss of coolant from the primary circuit to exceptional situations.

The isolation condenser, which operates under the same pressure conditions as the reactor and at the same time has to provide an adequate hydraulic head to ensure natural circulation, has to be located outside the main container and at a higher level, in a cooling pool.

An example of the above is known from document EP-A-0 256 059.

From the article of K.M. Vierow et al. "Analysis of SBWR passive containment cooling following LOCA" (Proceedings of the International Conference On design and safety of advanced nuclear power plants, 25-29 October 1992, Tokyo, Japan, Vol. 3, pages 31.2-1 ÷ 31.2-7) is known a steam condenser with natural circulation for the protection of a nuclear reactor comprising a heat exchanger "passive containment cooling PCCS" for condensing steam at high pressure immersed in a cooling pool (IC pool) and which comprises a plurality of exchange modules disposed symmetrically with respect to a vertical axis. Each module is formed by an upper manifold, a vertical array of pipes and a lower manifold.

Moreover the steam condenser of the above protection systems are not able to satisfy a number of particularly stringent requirements such as:
- a minimal pressure barrier outside the primary container,
- minimal probability of breakage,
- limitation of the effects of any breakages,
- resistance to abrupt temperature changes,
- adaptation to considerable thermal expansion and, at the same time, a plant which is resistant to seismic stresses.

All these specific requirements are aimed essentially towards a single objective: maximum safety and reliability of the plant.

The problem underlying the present invention is that of devising a steam condenser with natural circulation for systems for protecting nuclear reactors, steam plants and the like, which is able to satisfy the aforementioned requirements, to protect the system from any breakage in the steam-supply line outside the primary container and, in the meantime, to overcome the problem of stresses of thermal origin in the elements due to the temperature differences.

This problem is solved by the steam condenser of the type specified in Claim 1.

The steam condenser of the invention achieves these results by the combination of a plurality of measures which are listed briefly below and which, to a large extent, are functionally interdependent:
- a double wall of the main supply line of the condenser outside the PC,
- a condenser structure with several identical modules supplied by lines of small cross-section,
- a unitary, forged, weld-free body for distributing steam to the modules,
- flow-limiters integral with the distributor body for minimizing the effects of any breakage downstream,
- unitary, forged steam and condensate manifolds of the modules,
- a condenser structure with identical vertical modules disposed symmetrically around an axis and supported by suspensions with transverse restraints which allow for the thermal expansion made inevitable by the various operative conditions, and which ensure resistance to seismic stresses.

The characteristics and advantages of the invention will become clearer from the following description of a preferred embodiment and from the appended drawings, in which:
Figure 1 is a functional diagram of a nuclear reactor with a protection system having a steam condenser with natural circulation according to the present invention,
Figure 2 is a vertical section of the exchanger according to the invention, showing its location within the installation,
Figure 3 is a longitudinal section of the exchanger taken in the plane I-I of Figure 4,
Figure 4 is a view of the exchanger taken in the plane II-II of Figure 3,
Figure 5 is a partial section of a distributor for the exchanger, taken in the plane III-III of Figure 4, showing a flow-limiter integral with the distributor,
Figure 6 is a longitudinal section taken in the plane IV-IV of Figure 4, of an upper manifold of the exchanger, showing its unitary construction with integral flanges and inlet,
Figure 7 shows the upper support system of the exchanger,
Figure 8 and Figure 9 (which is a section taken in the plane V-V of Figure 8) show the lower support system of the exchanger.

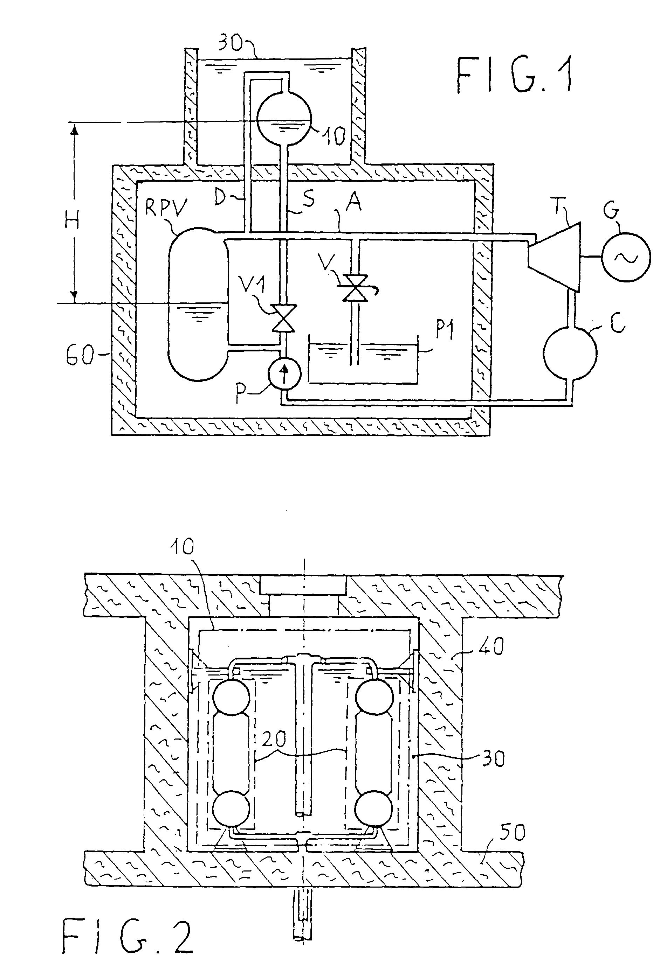

With particular reference to Figure 1, a boiling-water nuclear plant enclosed in a primary container 60 is shown schematically. In addition to the radioactive material and the elements for controlling the reaction, the reactor pressure-vessel RPV contains water which is used as a moderator and as a vehicle for transferring the heat produced. In the upper portion of the vessel RPV, the water is brought to the vapour state at high pressure and this vapour is in turn conveyed by a supply line A to a turbine T which drives an electrical generator G. The expanded steam output from the turbine T is cooled in a condenser C and the condensed liquid is readmitted to the vessel RPV by a pump P.

In normal operating conditions, the flow of steam output by the vessel RPV is equal in weight to the flow of water admitted to the vessel RPV by the pump P. In the event of a breakdown or intervention which causes an interruption of the flow of steam from A towards the turbine T, the pressure in the vessel RPV increases, causing the intervention of the safety valve V which, as it opens, discharges the steam coming from A into the pool P1 under a hydrostatic head. This involves the need for an immediate restoration of water to the vessel RPV and the dispersal of the heat discharged into the pool P1.

According to the invention, instead of or, preferably, in addition to the valve V and the pool P1, a bypass D is connected to the steam supply line A or directly to the vessel RPV and extends through the shield of the primary container, carrying steam to a condenser 10 immersed in a pool 30 which is disposed outside the primary container and at a higher level than the vessel RPV and is thus preferably disposed above the primary container, in order to reduce to a minimum the lengths of pipes which are at high pressure for large volumes.

The condenser 10 has a condensate outlet S which is connected to the vessel RPV by means of a control valve V1. The bypass D for delivering steam to the condenser 10, on the other hand, is permanently open.

According to the invention, the condenser 10 thus connected to the vessel RPV and arranged spatially in this manner relative thereto, constitutes a very effective protection system, the operation of which is clear.

In rest or "stand-by" conditions, the valve V1 is closed and the steam flowing from D into the condenser 10 condenses until the condenser is completely full of liquid at a temperature substantially equal to that of the water of the pool 30.

In emergency conditions and when excess pressure is detected or to be expected, the valve V1 is opened and the liquid housed in 10 flows back into the vessel RPV as a result of the hydrostatic head H existing between the free surface of liquid in the reactor and the free surface of liquid in the condenser 10.

The condensate output from 10 leaves room for the steam coming from D, which is rapidly cooled and condensed, achieving an effective control and reduction of the excess pressure in the reactor and preventing any dispersal of fluid or need for further restoration.

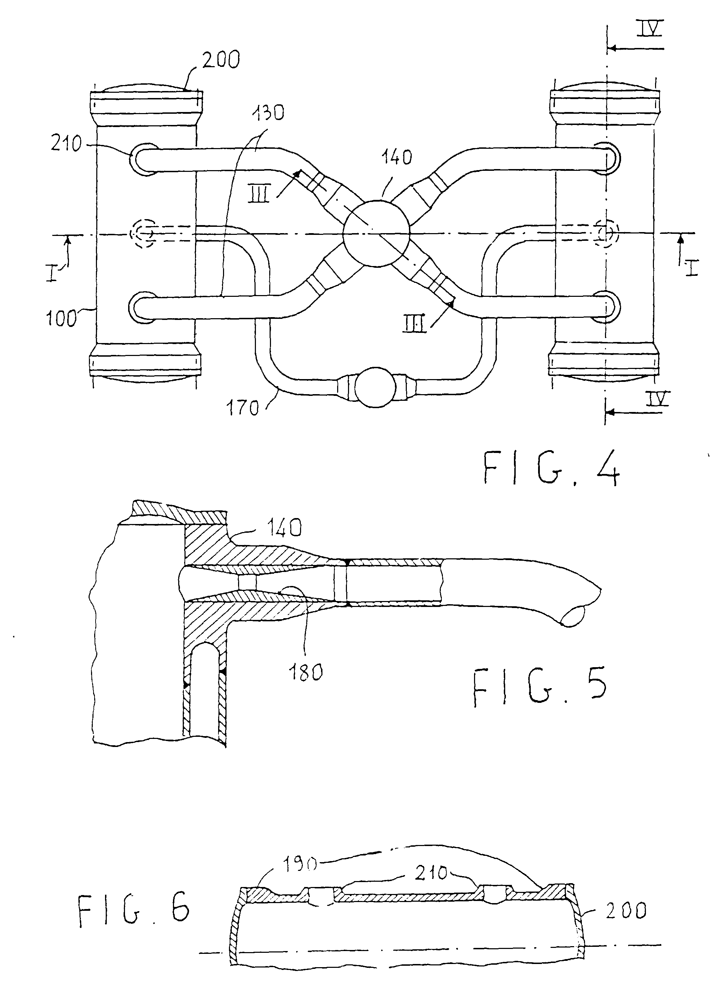

The design of the condenser-heat-exchanger 10 is described in greater detail below with reference to Figures 2 to 8.

In Figure 2, the exchanger, indicated by the chain line 10, is constituted by two identical modules 20 (indicated by broken lines) which are immersed in the pool 30, defined by the walls 40 and disposed above the slab 50 which constitutes the limit of the primary container 60.

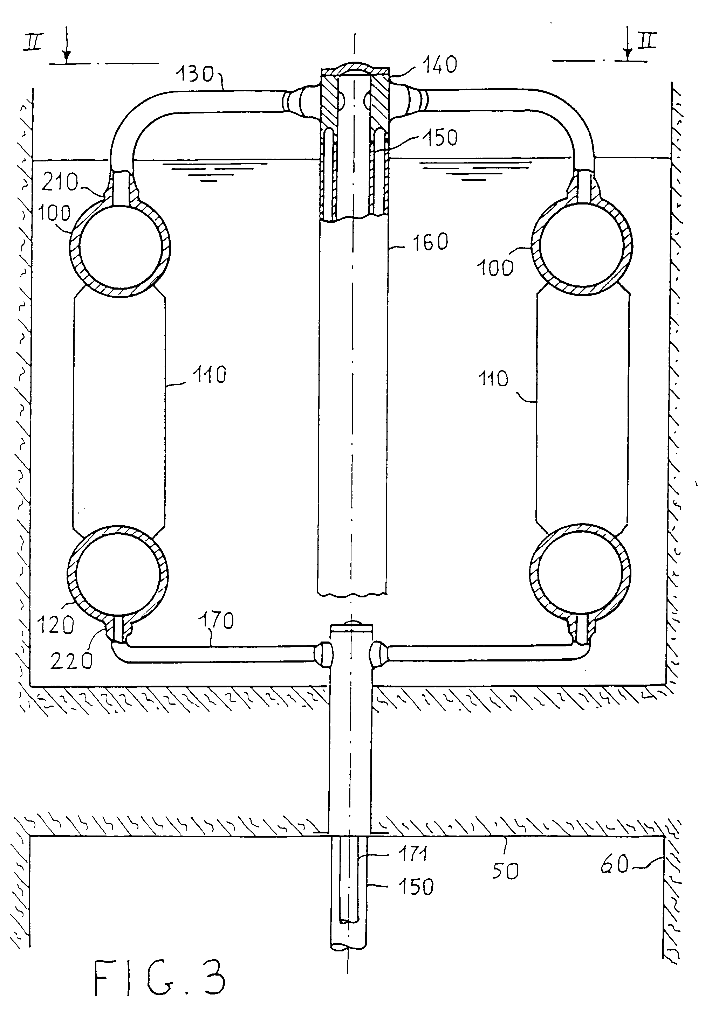

With reference to the subsequent Figures 3 to 6, each exchange module is constituted by an upper manifold 100, by an array of vertical pipes 110, and by a lower manifold 120. Each manifold 100 is closed at the ends by two covers 200 and is supplied by two lines 130 which extend from an "X"-shaped distributor 140 which in turn is connected to a main steam line 150. This constitutes an axis of vertical symmetry about which the modules are arranged structurally.

The main steam line 150 is in direct communication with the steam zone of the RPV and its portion which is outside the slab 50 defining the primary container 60, has a second wall 160.

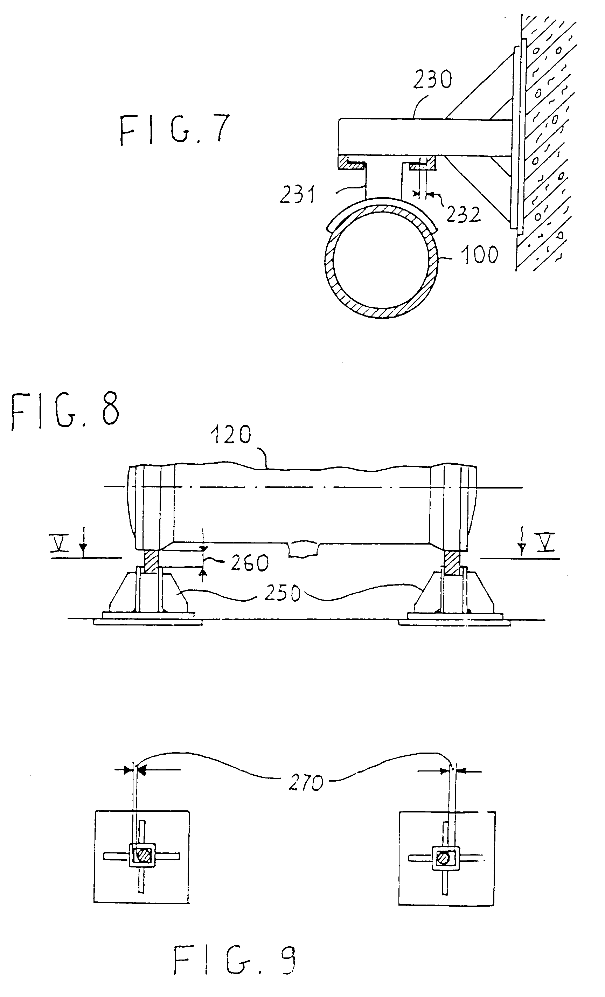

The drainage lines 170 of each lower manifold 120 are combined in a main line 171 which extends through the slab 50 and is reconnected to the RPV in the region just above the core. The distributor 140 has a steam inlet with vertical admission along the axis of symmetry and a plurality of outlets which are oriented radially relative to the axis of symmetry. Each of these has a flow-limiter 180 shaped like a Venturi tube. The manifolds 100 and 120 are of unitary construction, without welds (except those required by the condensate pipes), including the flanges 190 for the covers 200 and both the inlets 210 and the outlets 220. With reference to Figure 7, the upper support 230 consists of a block 231 which can slide in a direction perpendicular to the axes of the manifolds 100 and has very precise limits to its permissible travel 232.

With reference to Figures 8 and 9, the lower support system 250 has a vertical clearance 260, no clearance in the direction perpendicular to the manifolds 120, and a clearance 270 in the direction of the axes of the manifolds 120, only with respect to the outer portion.

The operation of the isolating condenser will be summarized below in order better to point out the advantages of the present invention and the various technical problems addressed and solved.

During the normal operation of the reactor, the isolation condenser 10 is in communication with the steam zone of the RPV by means of the main steam line 150 which is always open, the condensate drainage line 170, on the other hand, being closed from the interior of the container 60.

Since it is immersed in the water of the pool 30 at low temperature, the component gradually condenses the steam coming from the RPV and fills completely with condensed fluid up to the level of the distributor 140.

As a result, the whole component is normally at the temperature of the pool water, except for the main steam line 150, the distributor 140 and portions of the supply lines 130.

Even in conditions in which the component is not operating, that is in "stand-by" conditions, there are therefore stresses in its elements due not only to the pressure (which is equal to that of the primary circuit) but also to the temperature differences between this condition and that of the cold and depressurized installation.

In normal practice, the stresses of thermal origin are minimized by making the supply lines sufficiently flexible; this type of solution however has various problems connected with the possibility of vibrations of the pipes.

According to the present invention, the largest thermal expansions are absorbed by allowing the supply lines 130 to expand in the direction perpendicular to the manifolds 100 by a defined displacement 232; the restraints on the vibrations of the exchanger in the direction perpendicular to the manifolds are constituted, on the one hand, by the travel limits of the sliding-block support 231, and on the other hand, by the two supply pipes 130, the configuration of which is suitable both for restraining the movement of the manifolds and for providing the lines with sufficient rigidity.

The main steam line 150, on the other hand, is protected by a double wall or jacket 160 which isolates it from direct contact with the pool water, limiting the dispersal of heat to the pool and constituting a second barrier for protecting the container with respect to the exterior, in the event of the breakage of the line 150.

Expansion of the main steam line 150 is permitted within the main container body.

Another important aspect of the present invention is constituted by the high degree of reliability and protection against any breakage outside the main container. In fact, as already stated, the main steam line 150 has a double wall 160 and is connected to a safe and reliable unitary, forged distributor 140. Four flow-limiters 180, housed within the distributor 140 upstream of the supply lines to the manifolds, limit the effects of any breakage in any portion of the component to the critical out-flow level by means of the restricted cross-sections of the limiters. It should, however, be underlined that the probability of breakages downstream of the limiters is minimized with the use of forged weld-free manifolds.

The situation in which the isolation condenser is called upon to operate as a result of the closure of the valves in the steam line leading to the turbine will now be examined.

The component is actuated upon the opening of the normally-closed valve in the drainage line, which causes emptying-out of the condensate, creating a closed circuit between the steam zone of the RPV which supplies the machine and its lower region, to which the condensed steam returns.

The most important aspects of this stage are:
1 - the intense transient thermal state to which the component is subject when the cold condensate is replaced within a very short time by saturated steam at high temperature;
2 - the consequent thermal expansion of the various parts;
3 - the establishment of a natural circulation between the RPV and the condenser, based mainly on the equilibrium between the pressure drop on the steam side and the hydrostatic head on the condenser side.

According to the present invention, the first aspect is addressed by the use of the modularity concept which permits the use of smaller, thinner components which are therefore less sensitive to the effects of the transient thermal states. This concept leads, in practice, to a symmetrical structure of the exchange modules, which simplifies the solution of the other problems.

The problems connected with thermal expansion are solved by the suspended mounting of the upper manifolds, already described, combined with the particular type of support of the lower manifolds 120. This support 250 in fact allows downward elongation of the exchange pipes 110 as well as axial elongation of the lower manifolds 120; the vibration restraints are provided by a suitable selection of the clearances 260 and 270 which keep the component in contact with the support in both the "stand-by" and the operating conditions.

As far as the third aspect is concerned, natural circulation is favoured whilst protection against any breakages is simultaneously maintained, by the use of flow-limiters shaped like Venturi tubes which, with their low pressure-drops, help to achieve the object of low total pressure-drops in the natural circulation circuit.

According to the present invention, both in the "stand-by" condition which represents the greatly predominant condition during its operative life, and in operating conditions, which are characterized by particularly severe thermal loads, the isolation condenser is in a state which:
- favours operation with natural circulation,
- minimizes stresses,
- is safe from the point of view of vibrations,
- protects the system from any breakages outside the PC.

The foregoing description relates to a preferred embodiment of the invention but, clearly, many variations may be made to the structural and detailed aspects described, without thereby departing from the scope of the invention as claimed.

In particular, the number of modules constituting the exchanger of the invention may be changed from 2 to 4, whilst all the other measures envisaged for achieving the various requirements mentioned remain unaltered.

## Claims

1. A steam condenser with natural circulation for systems for protecting nuclear reactors or steam plants comprises a heat-exchanger for condensing steam (10) at high pressure, immersed in a cooling pool (30), a normally-open line (D,150) for bringing steam from a steam generator to the heat-exchanger for condensing steam (10) and a controlled, normally-closed drainage line (S,170,171) which is opened by the intervention of the protection system, characterised in that the heat-exchanger for condensing steam (10) comprises a plurality of exchange modules (20) and in that the normally-open line (D,150) comprises a main steam-supply line (150) constituted by a double-walled tube having a double wall or jacket (160) which isolates it from direct contact with the pool water and constituting a second barrier for preventing emission of steam towards the outside in the event of the breakage of the line (150).

2. A steam condenser according to Claim 1, in which the heat-exchanger for condensing steam (10) comprises a plurality of identical exchange modules (20) which are disposed symmetrically with respect to a vertical axis and each of which is formed by an upper manifold (100), a vertical array of pipes (110), and a lower manifold (120).

3. A steam condenser according to Claim 2, in which there are two modules (20).

4. A steam condenser according to any one of the preceding claims, in which the a main steam-supply line (150) constituted by a double-walled tube is disposed on said vertical axis of symmetry.

5. A steam condenser according to any one of the preceding claims, also comprising a steam distributor (140) for distributing to each module (20) of the heat-exchanger for condensing steam (10) the steam received from the main steam-supply line (150), the distributor (140) having a steam-inlet duct which is axial with respect to the vertical axis of symmetry and a plurality of distribution ducts which are radial with respect to the inlet duct, the distributor (140) being constituted by a single forged piece.

6. A steam condenser according to Claim 5, in which each radial distribution duct of the distributor (140) has a flow-limiter (180).

7. A steam condenser according to Claim 6, in which the flow-limiters (180) are of the Venturi type.

8. A steam condenser according to claim 2, in which the upper and lower manifolds (100,120) of each module (20) are constituted by single, forged, cylindrical pieces, each comprising end flanges (190) and at least one steam inlet (210) and one condensate outlet (220).

9. A steam condenser according to claim 2 or 8, comprising at least one suspension bracket (230,231) for each of the upper manifolds (100) with a predetermined radial clearance with respect to the axis of symmetry, and at least one pair of restraints, each with clearance for sliding vertically along the axis of symmetry and predetermined clearance transverse the axis of symmetry.

## Patentansprüche

1. Dampfkondensator mit Naturumlauf für Systeme zum Schutz von Kernreaktoren oder Dampfanlagen, bestehend aus einem Wärmetauscher (10) zum Kondensieren von Dampf mit hohem Druck, der in ein Kühlbecken (30) eingetaucht ist, einer normalerweise offenen Leitung (D, 150) zum Transport von Dampf von einem Dampfgenerator zum Dampfkondensationswärmetauscher (10), und einer gesteuerten, normalerweise geschlossenen Auslaßleitung (S, 170, 171), die durch die Aktivierung des Schutzes (10) geöffnet wird,
**dadurch gekennzeichnet, daß**
der Dampfkondensationswärmetauscher (10) mehrere Wärmetauschermodule (20) hat, und daß die normalerweise offene Leitung (D, 150) eine Hauptdampfzufuhrleitung (150) hat, die aus einem doppelwandigen Rohr besteht, das eine Doppelwand bzw. einen Doppelmantel (160) zur Isolierung gegen einen direkten Kontakt mit dem Beckenwasser hat und das eine zweite Barriere bildet, um die Emission von Dampf nach außen im Falle eines Bruchs der Leitung (150) zu verhindern.

2. Dampfkondensator nach Anspruch 1, bei dem der Dampfkondensationswärmetauscher (10) mehrere identische Module (20) hat, die bezüglich einer vertikalen Achse symmetrisch angeordnet sind, und von denen jedes aus einem oberen Verteilerrohr (100), einem vertikalen Feld von Rohren (110) und einem unteren Verteilerrohr (120) gebildet ist.

3. Dampfkondensator nach Anspruch 2, bei dem zwei Module (20) vorhanden sind.

4. Dampfkondensator nach einem der vorhergehenden Ansprüche, bei dem die Hauptdampfzufuhrleitung (150) aus einem doppelwandigen Rohr besteht und auf der vertikalen Symmetrieachse angeordnet ist.

5. Dampfkondensator nach einem der vorhergehenden Ansprüche, weiterhin aufweisend einen Dampfverteiler (140) zum Verteilen des von der Hauptdampfzufuhrleitung (150) erhaltenen Dampfes an jedes Modul (20) des Dampfkondensationswärmetauschers (10), wobei der Verteiler (140) eine Dampfeinlaßleitung, die bezüglich der vertikalen Symmetrieachse axial verläuft, und mehrere Verteilerleitungen hat, die bezüglich der Einlaßleitung radial verlaufen, wobei der Verteiler (140) aus einem einzigen, geschmiedeten Stück besteht.

6. Dampfkondensator nach Anspruch 5, bei dem jede radiale Verteilerleitung des Verteilers (140) einen Durchflußbegrenzer (180) hat.

7. Dampfkondensator nach Anspruch 6, bei dem die Durchflußbegrenzer (180) vom Venturi-Typ sind.

8. Dampfkondensator nach Anspruch 2, bei dem die oberen und unteren Verteilerrohre (100, 120) jedes Moduls (20) aus einzelnen, geschmiedeten, zylindrischen Stücken bestehen, von denen jedes Endflansche (190) und wenigstens einen Dampfeinlaß (210) und einen Kondensatauslaß (220) hat.

9. Dampfkondensator nach Anspruch 2 oder 8, aufweisend wenigstens einen Aufhängeträger (230, 231) für jedes der oberen Verteilerrohre (100) mit einem bestimmten radialen Abstand zur Symmetrieachse, und wenigstens ein Paar Begrenzungselemente, jedes mit einem Spiel zur vertikalen Gleitbewegung längs der Symmetrieachse und mit einem bestimmten Spiel quer zur Symmetrieachse.

## Revendications

1. Condenseur de vapeur à circulation naturelle pour des systèmes destinés à protéger des réacteurs nucléaires ou des centrales à vapeur, qui comprend un échangeur de chaleur (10) pour condenser la vapeur sous haute pression, immergé dans un bain de refroidissement (30), une ligne normalement ouverte (D, 150) destinée à amener la vapeur d'un générateur de vapeur à l'échangeur de chaleur (10) pour condenser la vapeur et une ligne d'écoulement commandée et normalement fermée (S, 170, 171) qui est ouverte sous l'effet du système de protection, caractérisé en ce que l'échangeur de chaleur (10) pour condenser la vapeur comprend une pluralité de modules échangeurs (20) et en ce que la ligne normalement ouverte (D, 150) comprend une ligne d'alimentation en vapeur principale constituée d'un tube à double paroi pourvu d'une double paroi ou enveloppe (160) qui l'isole d'un contact direct avec l'eau du bain et qui constitue une seconde barrière destinée à empêcher l'émission de vapeur vers l'extérieur dans le cas où se produit une rupture de la ligne (150).

2. Condenseur de vapeur selon la revendication 1, dans lequel l'échangeur de chaleur (10) pour condenser la vapeur comprend une pluralité de modules échangeurs identiques (20) qui sont disposés symétriquement par rapport à un axe vertical et dont chacun est formé d'un collecteur supérieur (100), d'un ensemble vertical de conduites (110) et d'un collecteur inférieur (120).

3. Condenseur de vapeur selon la revendication 2, dans lequel deux modules (20) sont présents.

4. Condenseur de vapeur selon l'une quelconque des revendications précédentes, dans lequel la ligne d'alimentation en vapeur principale (150) constituée d'un tube à double paroi est disposée sur le dit axe vertical de symétrie.

5. Condenseur de vapeur selon l'une quelconque des revendications précédentes, comprenant également un distributeur de vapeur (140) destiné à distribuer, à chaque module (20) de l'échangeur de chaleur (10) pour condenser la vapeur, la vapeur reçue en provenance de la ligne d'alimentation en vapeur principale (150), le distributeur (140) comportant un conduit d'entrée de vapeur qui est axial par rapport à l'axe vertical de symétrie et une pluralité de conduits de distribution qui sont radiaux par rapport au conduit d'entrée, le distributeur (140) étant constitué d'une unique pièce forgée.

6. Condenseur de vapeur selon la revendication 5, dans lequel chaque conduit de distribution radial du distributeur (140) est équipé d'un limiteur de débit (180).

7. Condenseur de vapeur selon la revendication 6, dans lequel les limiteurs de débit (180) sont du type Venturi.

8. Condenseur de vapeur selon la revendication 2, dans lequel les collecteurs supérieurs et inférieurs (100, 120) de chaque module (20) sont constitués d'uniques pièces forgées cylindriques, chacune comprenant des brides d'extrémité (190) et au moins une entrée de vapeur (210) et une sortie de condensat (220).

9. Condenseur de vapeur selon la revendication 2 ou 8, comprenant au moins une console de suspension (230, 231) pour chacun des collecteurs supérieurs (100) avec un jeu radial prédéterminé par rapport à l'axe de symétrie, et au moins une paire de dispositifs de retenue, chacun avec un jeu lui permettant de glisser verticalement le long de l'axe de symétrie et avec un jeu prédéterminé transversal à l'axe de symétrie.
